# EUROPEAN PATENT APPLICATION

(11) **EP 3 399 300 A1**
(43) Date of publication of application: **07.11.2018**
(21) Application number: 17168935.9
(22) Date of filing: 02.05.2017
(51) Int. Cl.: G01N 21/27, G01N 21/64

(54) **FLUORESCENCE REFERENCE SAMPLE ARRANGEMENT INCLUDING AN EXCITATION FILTER AND AN EMISSION FILTER**

(71) Applicant: QIAGEN Lake Constance GmbH, 78333 Stockach (DE)
(72) Inventor: Bolle, Joachim, 78333 Stockach (DE)
(74) Representative: Raible Deissler Lehmann Patentanwälte PartG mbB

(57) **Abstract**

The invention provides for a fluorescence reference sample arrangement for use in a method for calibrating a fluorescence detector which is suitable for a particular custom sample comprising a fluorescence reference sample and at least one bandpass filter assigned to the fluorescence reference sample, wherein the at least one bandpass filter is effective in two spectral ranges such that the fluorescence reference sample arrangement emits the same spectrum as the custom sample caused by fluorescence.

## Description

### Field of the invention

The present invention relates to a fluorescence reference sample arrangement and a method for calibrating a fluorescence detector using such a fluorescence reference sample arrangement.

### Description of the related art

A fluorescence detector which can be calibrated by a method described herein is a device adapted for performing a measurement based on fluorescence. Fluorescence is the emission of light by a substance that has absorbed light or other electromagnetic radiation as a form of luminescence or photoluminescence. In most cases, the emitted light has a longer wavelength and, therefore, lower energy, than the absorbed radiation.

In use, all fluorescence meters have to give stable and normalized signals. This means that some sort of calibration must be carried out in the factory in such a way that the devices all report very similar results for given samples.

Calibration is an operation that under specified conditions, in a first step, establishes a relation between the quantity values with measurement uncertainties provided by measurement standards and corresponding indications with associated measurement uncertainties of the calibrated device or secondary standard and, in a second step, uses this information to establish a relation for obtaining a measurement result from an indication.

Document US 5 414 258 A shows an apparatus for calibration of fluorescence detectors using non-visible light. The apparatus comprises a housing impervious both to said non-visible light and to said fluorescence to be detected, a standard target element enclosed within said housing comprising a predetermined combination of one or more predetermined fluorescent substances, an apparatus element enclosed within said housing, adapting means for adapting said housing to fit a fluorescence detector, and means for adjusting the distance between said adapting means and said standard target element, so that a predetermined intensity of said fluorescence is presented to a detector to be calibrated. The apparatus is especially useful for portable use in field calibration of fluorescence detectors of authentication systems that use non-visible light.

A known method for calibrating a fluorescence detector comprises the step of adjusting the source which is used for providing the excitation beam. The problem is that this calibration is only suitable in case the calibration standard is made of the same material as the fluorescence samples which have to be investigated.

However, in many cases the customers want to investigate materials which are liquid and instable that means that these materials are difficult to handle and permanently change their characteristics. This is why such materials are not suitable for use in a calibration standard.

### Summary of the invention

In contrast thereto, the invention proposes a fluorescence reference sample arrangement for use in a method for calibrating a fluorescence detector according to claim 1 and a method for calibrating a fluorescence detector according to claim 5.

The fluorescence reference sample arrangement proposed is for use in a method for calibrating a fluorescence detector which is suitable for a particular custom sample. The fluorescence reference sample arrangement comprises a fluorescence reference sample and at least one bandpass filter assigned to the fluorescence reference sample, wherein the at least one bandpass filter is effective in two spectral ranges such that the fluorescence reference sample arrangement emits the same spectrum as the custom sample caused by fluorescence.

To be effective in two spectral ranges means that the at least one bandpass filter forming a bandpass filter arrangement has two transmission ranges. The material used for the fluorescence reference sample should have a wide or broad absorption spectrum as the at least one bandpass filter cannot add light.

The at least one bandpass filter can be a dual bandpass filter forming a bandpass filter arrangement.

Alternatively, two bandpass filters forming a bandpass filter arrangement are provided.

The at least one bandpass filter can be attached, particularly, movably attached, to the fluorescence reference sample.

In one embodiment, the fluorescence reference sample is a solid state body so that the fluorescence reference sample is made of a stable material.

The proposed method for calibrating a fluorescence detector uses a fluorescence reference sample arrangement as described above and comprises the steps of:
providing an excitation beam,
filtering the excitation beam with a first bandpass filter resulting in a filtered excitation beam,
irradiating the fluorescence material with the filtered excitation beam, the filtered beam being absorbed by the fluorescence material,
filtering an emission beam emitted by the fluorescence material as a result of fluorescence of the fluorescence material caused by absorption of the filtered excitation beam with a second bandpass filter resulting in a filtered excitation beam, and
detecting the filtered excitation beam with help of the fluorescence detector.

The first bandpass filter and the second bandpass filter can be provided by one particular bandpass filter.

In one embodiment, the particular bandpass filter is a dual bandpass filter.

Typically, within the detector an electrical signal is created which is representative for the detected filtered excitation beam and, therefore, can be used for evaluating the result of the detection and, accordingly, for calibration.

A LED (light emitting diode) can be used for providing the excitation beam.

The proposed fluorescence reference sample forms a standard consisting of fluorescence material with at least one additional bandpass filter. The purpose of such a so-called fluorescence reference system is for the calibration of fluorescence detectors. The material used for the fluorescence reference sample can differ from the custom material to be investigated. It is to be noted that is necessary to provide one fluorescence reference sample arrangement for each custom material to be investigated.

Further features and embodiments of the invention will become apparent from the description and the accompanying drawings.

It will be understood that the features mentioned above and those described hereinafter can be used not only in the combination specified, but also in other combinations or on their own, without departing from the scope of the present invention.

The invention is diagrammatically illustrated in the drawings by means of an embodiment by way of example and is hereinafter explained in detail with reference to the drawings. It is understood that the description is in no way limiting on the scope of the present invention and is merely an illustration of a preferred embodiment of the invention.

### Brief description of the Drawings

In the drawings,
Figure 1 is a graph showing the spectral behavior of a dual bandpass filter,
Figure 2 is a diagram showing a set-up for calibration of a fluorescence detector,
Figure 3 is a graph illustrating the spectral behavior of absorption and emission curves of a fluorescence material,
Figure 4 is a graph showing an absorption spectrum,
Figure 5 is a graph showing an absorption spectrum,
Figure 6 is a graph showing the absorption and emission soectrum of a fluorescence material,
Figure 7 is a diagram showing a set-up for calibration of a fluorescence detector according to the invention,
Figure 8 is a graph illustrating the spectral behavior of a fluorescence material,
Figure 9 is a graph illustrating the spectral behavior of a fluorescence material with a dual bandpass filter, and
Figure 10 is a graph showing the two transmission ranges of a dual bandpass filter.

### Detailed Description

The figures are described cohesively and in overlapping fashion, the same reference numerals denoting identical parts.

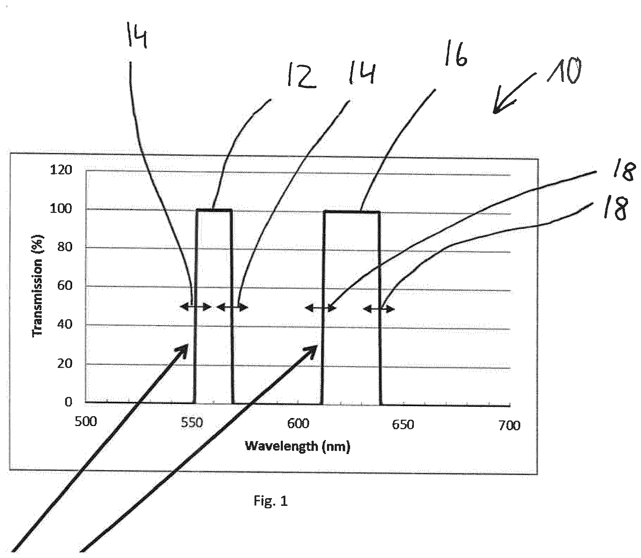

Figure 1 shows in a graph 10 a transmission curve 12 representing the transmission range of a excitation bandpass filter of the detectors 1, ...N. Double arrows 14 illustrate the tolerances of the excitation bandpass filter. Furthermore, graph 10 shows a transmission curve 16 representing the transmission range of a detection bandpass filter of the detectors 1, ...N. Double arrows 18 illustrate the tolerances of the detection bandpass filter.

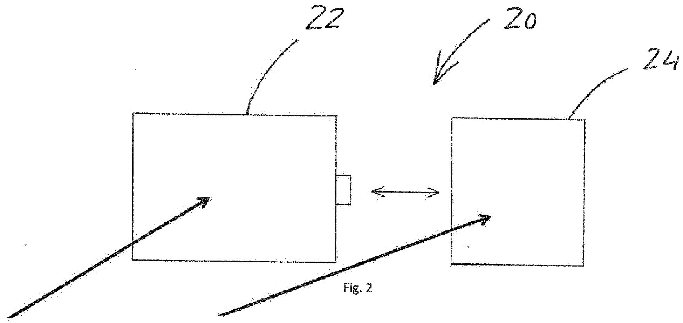

Figure 2 shows an arrangement for calibration of a fluorescence detector overall denoted with reference number 20. The diagram shows a fluorescence detector 22 and a fluorescence material 24. The fluorescence detector 22 is placed in front of the fluorescence material 24. Excitation light which passes the excitation bandpass filter of the fluorescence detector 22 is illuminating or irradiating the fluorescence material 24. The fluorescence material 24 absorbs a part of the excitation light and emits the fluorescence light. Part of the fluorescence light is scattered in detector and passes the detection bandpass filter of the detector and is creating an electrical detector signal.

By adjusting the excitation light quantity the detector 22 can be calibrated to make sure that the detector 22 measures the same signal as other detectors.

The problem is that fluorescence material 24 used when calibrating the detector 22 differs from the materials to be examined. That is why this method for calibrating the detector 22 is not sufficient.

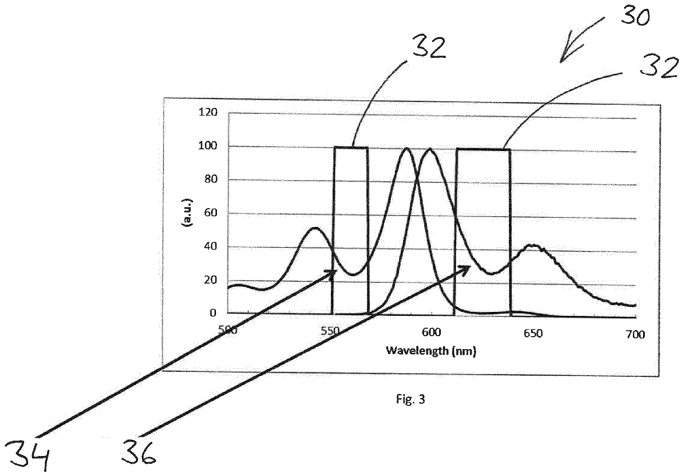

Figure 3 shows in graph 30 a transmission curve 32 of the dual bandpass filter, an absorption spectrum 34 of a fluorescence material and an emission spectrum 36 of the fluorescence material. Therefore, figure 3 shows the spectral absorption and emission curves of a fluorescence material with regard to spectrum of the dual bandpass filter and, particularly, the spectral behaviour of absorption and emission curves of a fluorescence material with a transmission curve of a dual bandpass filter.

By placing in front of the fluorescing material, the dual bandpass filter, the spectrum which is seem by the fluorescence material is constricted by the transmission curve of the dual bandpass filter. Also the emission spectrum of the fluorescence material is modified and restricted.

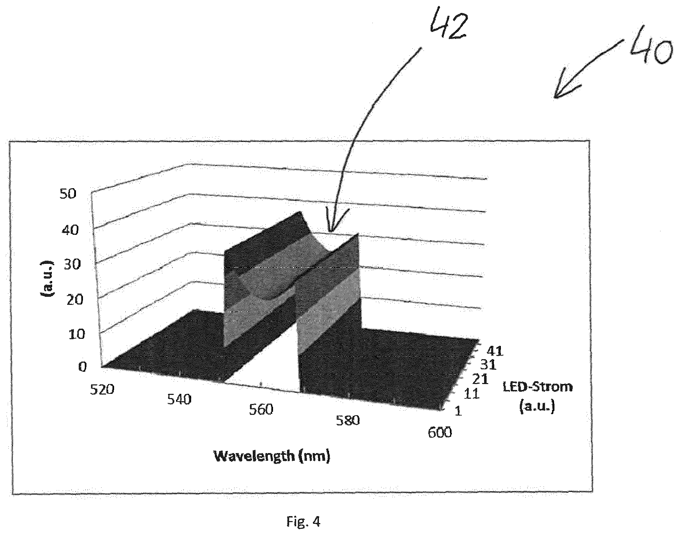

Figure 4 shows in a graph 40 the absorption spectrum 42 of a fluorescence material multiplied by the transmission range of the excitation bandpass filter. With help of the LED current (LED: light emitting diode) as an additional dimension the volume can be adjusted. In case the cut on and cut off wavelengths of the excitation bandpass filter change the LED current will be adjusted accordingly.

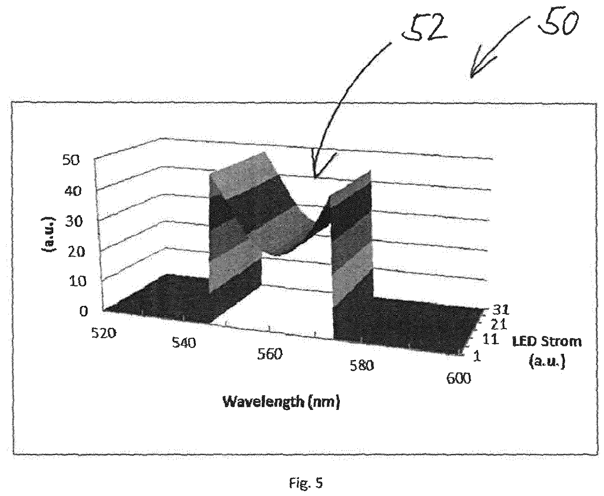

Figure 5 shows a graph 50 illustrating the absorption spectrum 52 multiplied by the transmission range of the excitation bandpass filter. In contrast to the spectrum 42 in figure 4, the cut on and cut of wavelengths have shifted, e. g. by tolerances during fabrication, such that the fluorescence material will be excited in a spectrally broader manner. The LED current has to be reduced to make sure that the volume is equal to the volume in figure 4.

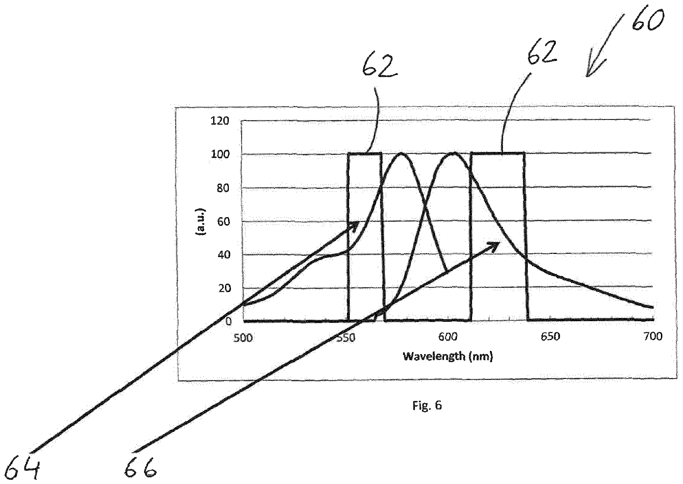

Figure 6 shows in a graph 60 a transmission curve 32 of the dual bandpass filter, an absorption spectrum 64 of a fluorescence material and an emission spectrum 66 of the fluorescence material used by a customer and differing from the fluorescence materials used according to figure 3. Figure 6 shows the spectral absorption and emission curves of a fluorescence material used by the customer with regard to spectrum of the dual bandpass filter and, particularly, the spectral behaviour of absorption and emission curves of a fluorescence material with a transmission curve of a dual bandpass filter.

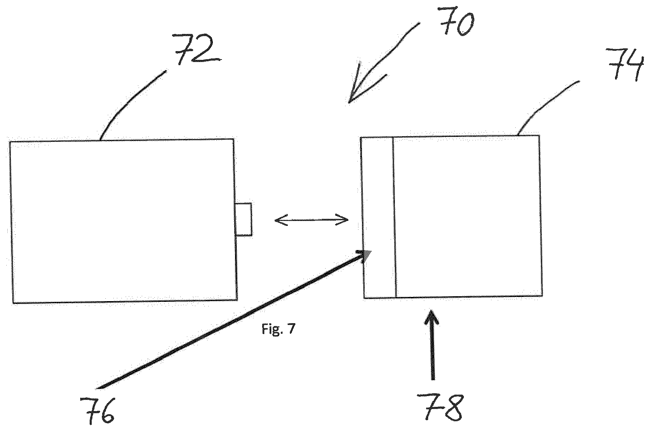

Figure 7 shows an arrangement for calibration of a fluorescence detector with a dual bandpass filter overall denoted by reference number 70. The figure shows a fluorescence detector 72, a fluorescence material 74 and a dual bandpass filter 76 attached to the fluorescence material 54.The fluorescence material 54 and the dual bandpass filter 76 form a fluorescence reference sample 78.

For equal adjustment and calibration of detectors it is proposed to keep the fluorescence material 74 but to place in front a particular designed dual bandpass filter 76. This dual bandpass filter 76 reduces absorption and emission spectrum of the fluorescence material 74 and ensures the fluorescence reference sample 78 spectrally behaves like the fluorescence material used by the customer. That is why the fluorescence reference sample 78 can be used for calibrating the detector 72.

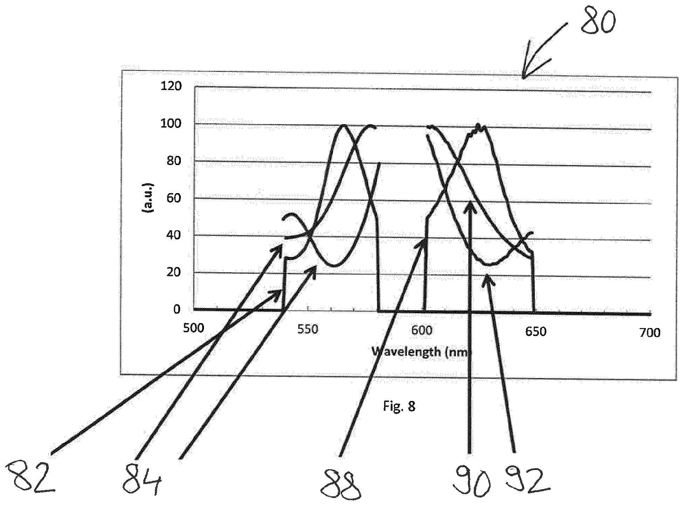

Figure 8 shows a graph 80 illustrating a filter transmission range 82 which corresponds to an absorption curve X 84 divided by an absorption curve Y 86. Furthermore, figure 8 illustrates a filter transmission range 88 which corresponds to an emission curve X 90 divided by an emission curve Y 92.

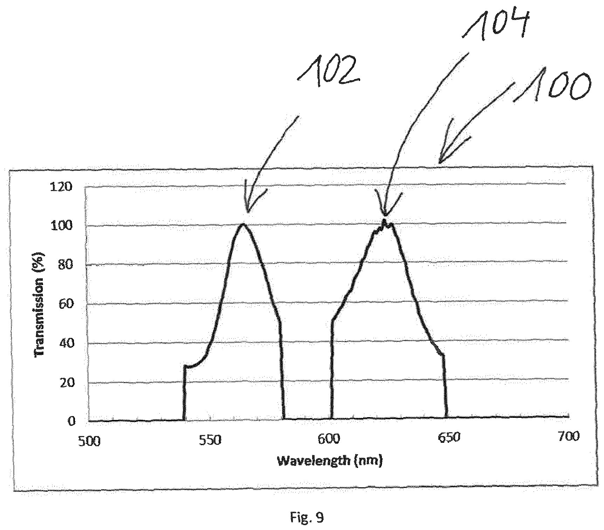

Figure 9 shows a graph 100 illustrating a first and second filter transmission ranges 102 and 104 of a dual band pass filter which are spectrally broader than the maximum filter tolerances of the excitation and emission bandpass filter of the particular detectors 1, ...N and having a calculated shape in the transmission range.

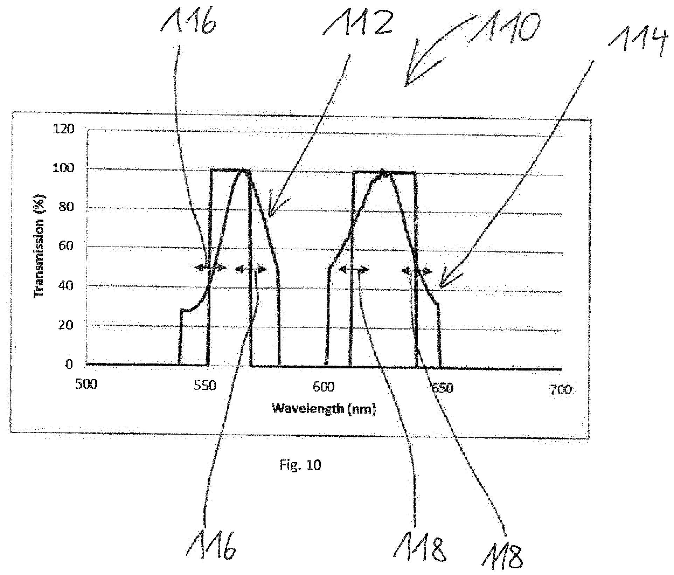

Figure 10 shows in a graph 110 a first and a second transmission ranges 112 and 114 of a calculated dual bandpass filter which are spectrally broader than the maximum filter tolerances (double arrows 116, 118 of the excitation and emission bandpass filter of the detectors.

## Claims

1. Fluorescence reference sample arrangement for use in a method for calibrating a fluorescence detector which is suitable for a particular custom sample comprising a fluorescence reference sample and at least one bandpass filter assigned to the fluorescence reference sample, wherein the at least one bandpass filter is effective in two spectral ranges such that the fluorescence reference sample arrangement emits the same spectrum as the custom sample caused by fluorescence.

2. Fluorescence reference sample according to claim 1, wherein the at least one bandpass filter is a dual bandpass filter.

3. Fluorescence reference sample arrangement according to claim 1, wherein two bandpass filters are provided.

4. Fluorescence reference sample arrangement, wherein the at least one bandpass filter is attached to the fluorescence reference sample.

5. Fluorescence reference sample arrangement, wherein the fluorescence reference sample is a solid state body.

6. Method for calibrating a fluorescence detector, wherein a fluorescence reference sample arrangement according to one of claims 1 to 5, is investigated based on fluorescence, comprising the steps of
providing an excitation beam,
filtering the excitation beam with a first bandpass filter resulting in a filtered excitation beam,
irradiating the fluorescence material with the filtered excitation beam, the filtered beam being absorbed by the fluorescence material,
filtering an emission beam emitted by the fluorescence material as a result of fluorescence of the fluorescence material caused by absorption of the filtered excitation beam with a second bandpass filter resulting in a filtered excitation beam, and
detecting the filtered excitation beam with help of the fluorescence detector.

7. Method according to claim 6, wherein the first bandpass filter and the second bandpass filter are provided by one particular bandpass filter.

8. Method according to claim 7, wherein the particular bandpass filter is a dual bandpass filter.

9. Method according to one of claims 6 to 8, wherein the detected filtered excitation beam creates an electrical signal representative for the detected filtered excitation beam.

10. Method according to one of claims 6 to 9, wherein a LED is used for providing the excitation beam.
